# EUROPEAN PATENT APPLICATION

(11) **EP 4 822 563 A1**
(43) Date of publication of application: **14.10.2026**
(21) Application number: 25305527.1
(22) Date of filing: 11.04.2025
(51) Int. Cl.: G06F 17/18, G06N 10/00

(54) **METHOD FOR CHARACTERIZING THE IMAGING FIDELITY OF AN IMAGING UNIT**

(71) Applicant: Pasqal, 91120 Palaiseau (FR)
(72) Inventor: ALBRECHT, Boris, 91120 Palaiseau (FR); ORTIZ GUTIERREZ, Luis, 91120 Palaiseau (FR); SCHOLL, Pascal, 91120 Palaiseau (FR)
(74) Representative: Plasseraud IP

(57) **Abstract**

The invention relates to a method for characterizing the imaging fidelity of an imaging unit (22) of a quantum device (12), the imaging unit (22) being suitable to acquire images of a quantum register generated by the quantum device (12), and to detect, on the acquired images, particles trapped in trapping sites of the quantum register as a function of a given detection threshold, the detection threshold being such that, for each trapping site, a particle is considered present in said trapping site when the number of electrons, resulting from the conversion of the photons received by the imaging unit (22) at the location of said trapping site, is above the detection threshold, and being considered absent otherwise, the method being implemented by a computing system (10) comprising the quantum device (12) and a classical computer (14).

## Description

### TECHNICAL FIELD OF THE INVENTION

The present invention concerns a method for characterizing the imaging fidelity of an imaging unit. The present invention also concerns an associated computing system.

### BACKGROUND OF THE INVENTION

Imaging has a crucial role in atom-, ion- and molecule-based quantum computing. Indeed, it allows detecting the presence of a particle at a specific spatial location, which is then often used to identify a qubit state. More generally, imaging is used at every stage of a quantum computation: before a calculation in order to identify the particle positions in space, during a calculation (e.g., in fault tolerant quantum computing in order to correct for errors), and at the end of any type of calculation, in order to read the qubit state which provides the solution to a given calculated problem.

Imaging of individually trapped particles, such as neutral atoms, has been achieved for over two decades. The characteristic feature of imaging on such platforms is the digital way the signal is recorded: either a particle is present and emits a number of photons (via fluorescence) detected by a camera (in which the photons are converted into electrons), or the particle is absent, in which case no photons (hence no electrons) should be measured by the camera, in an ideal scenario. Two typical levels of photons count number can therefore be defined with a certain distribution, separated by a threshold value which corresponds either to having no particle, or one particle, in a specific position (such as in an optical trap).

In reality, owing to imperfections coming from, for example, the particles, the optical system, or the camera, there is an overlap between peaks of the distributions leading to a nonzero probability of misinterpreting the presence or absence of a particle in a given trap.

Such misinterpretations lead to errors at various levels: from inducing errors in register preparation via rearrangement (in the case when particles are trapped in an array of traps, e.g. to be used as a quantum register in a quantum computer), to misidentifying the prepared quantum state after a (digital or analog) quantum calculation. Accurate measurement of such errors is therefore of utmost importance for characterizing the imaging fidelities of quantum processors.

In practice, the most common approach for measuring such imaging fidelity is to take images of particles, collect the obtained fluorescence on the camera, aggregate the data, plot the obtained histogram and analyze the distribution of photons measured by the camera.

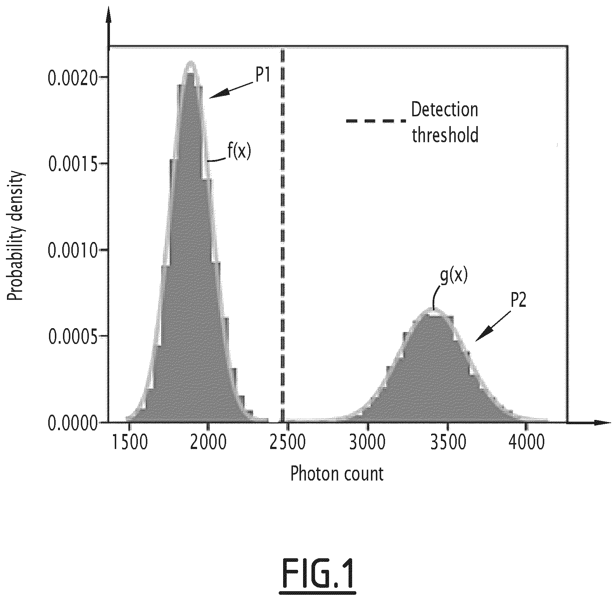

As illustrated on figure 1, the usually obtained histogram presents two peaks: one displaying low photon numbers (peak P1), corresponding to no particle being observed, and one displaying high photon numbers (peak P2), corresponding to observing a particle. The shape of such peaks is usually close to a Gaussian distribution for the high level of photon peak, and close to a Poisson distribution for the low level of photon peak. Figure 1 illustrates the fitting of the low level of photon peak and the high level of photon peak with the curves f(x) and g(x).

However, such a method has the three following drawbacks.

First, it only provides an estimate on imaging fidelity, as it relies on fitting a distribution with a known function. Nevertheless, the true distributions cannot be completely grasped by such idealized distributions as its true shape has many different contributions, and the obtained results is thus uncertain.

Second, it is not robust to changes in imaging parameters, as it relies on fitting the distribution with a certain shape, that could be qualitatively correct for one imaging setting, but strongly wrong for another one.

Third, this method only provides numbers on imaging fidelity. However, it has been shown that imaging can by itself lead to atom loss, which is not taken into account in this model. Moreover, another important parameter is the filling fraction of atoms, which is not taken into account in this method, but which has an impact on the histogram, as it will change the relative height of the peaks, which will lead to variations of measured false positive and false negative using the above method.

### SUMMARY OF THE INVENTION

Hence, there exists a need for a method enabling to characterize more precisely the imaging fidelity when detecting particles at every stage of a quantum computation, as compared to methods of the state of the art based on the fitting of distributions with known functions.

To this end, the invention relates to a method for characterizing the imaging fidelity of an imaging unit of a quantum device, the imaging unit being suitable to acquire images of a quantum register generated by the quantum device, and to detect, on the acquired images, particles trapped in trapping sites of the quantum register as a function of a given detection threshold, the detection threshold being such that, for each trapping site, a particle is considered present in said trapping site when the number of electrons, resulting from the conversion of the photons received by the imaging unit at the location of said trapping site, is above the detection threshold, and being considered absent otherwise, the method being implemented by a computing system comprising the quantum device and a classical computer, and comprising the following phases:
- performing several cycles of imaging of the quantum register according to a first scenario to obtain a first imaging set per cycle, each cycle according to the first scenario comprising the following steps:
   - loading particles in the trapping sites of the quantum register,
   - acquiring, by the imaging unit, at least two successive images of the quantum register with a defined time delay between the acquisitions,
- performing several cycles of imaging of the quantum register according to a second scenario to obtain a second imaging set per cycle, each cycle according to the second scenario comprising a step of acquiring, by the imaging unit, at least one image of the quantum register with no particles trapped in the trapping sites,
- detecting on each first imaging set, by the imaging unit, based on the detection threshold, the presence or absence of particles in the trapping sites of the quantum register, and determining, on the basis of the detections, the probabilities of detecting or not a particle in a same trapping site on the images acquired during a cycle according to the first scenario, the determined probabilities depending on the following quantities:
   - Fₜ: a trapping sites filling probability,
   - S: a survival probability for a trapped particle between the at least two successive acquisitions,
   - F₀: a probability of true negative defined as the probability of not detecting a particle in a trapping site while there was no particle,
   - F₁: a probability of true positive defined as the probability of detecting a particle in a trapping site while there was one,
- detecting on each second imaging set, by the imaging unit, based on the detection threshold, the presence or absence of particles in the trapping sites of the quantum register, and determining, on the basis of the detections, at least the probability of detecting no particle in a same trapping site on the image(s) acquired during a cycle according to the second scenario, the determined probability being dependent on the probability of true negative F₀, and
- determining, by the classical computer, the quantities Fₜ, S, F₀ and F₁ as a function of the probabilities determined from the first imaging sets and the second imaging sets, the determined quantities Fₜ, S, F₀ and F₁ enabling characterizing the imaging fidelity of the imaging unit for the given detection threshold.

The method according to the invention may comprise one or more of the following features considered alone or in any combination that is technically possible:
- the probabilities determined from the first imaging sets comprise at least:
   - a probability P_{11-C1} of detecting a particle in a same trapping site on two successive images acquired during a cycle according to the first scenario,
   - a probability P_{10-C1} of detecting a particle in a trapping site on an image and not detecting a particle in said trapping site on a successive image, the images being acquired during a cycle according to the first scenario,
   - a probability P_{01-C1} of not detecting a particle in a trapping site on an image, and of detecting a particle in said trapping site on a successive image, the images being acquired during a cycle according to the first scenario, and
   - a probability P_{00-C1} of detecting no particle in a same trapping site on two successive images acquired during a cycle according to the first scenario;
- the probabilities determined from the first imaging sets are linked to the quantities Fₜ, S, F₀ and F₁ by the following equations: ${P}_{00 - C 1} = {F}_{t} \left(1-{F}_{1}\right) \left[S\left(1-{F}_{1}\right)+\left(1-S\right){F}_{0}\right] + \left(1-{F}_{t}\right) {F}_{0} {F}_{0}$ ${P}_{01 - C 1} = {F}_{t} \left(1-{F}_{1}\right) \left[{SF}_{1}+\left(1-S\right)\left(1-{F}_{0}\right)\right] + \left(1-{F}_{t}\right) {F}_{0} \left(1-{F}_{0}\right)$ ${P}_{10 - C 1} = {F}_{t} {F}_{1} \left[S\left(1-{F}_{1}\right)+\left(1-S\right){F}_{0}\right] + \left(1-{F}_{t}\right) {F}_{0} \left(1-{F}_{0}\right)$ ${P}_{11 - C 1} = {F}_{t} {F}_{1} \left[{SF}_{1}+\left(1-S\right)\left(1-{F}_{0}\right)\right] + \left(1-{F}_{t}\right) \left(1-{F}_{0}\right) \left(1-{F}_{0}\right) ;$
- each cycle according to the second scenario comprises the acquisition, by the imaging unit, of at least two successive images of the quantum register with no particles trapped in the trapping sites, the two images being acquired with a defined time delay between the two acquisitions, the detection and determination phase, for each second imaging set, comprising the determination of the probability p_{00-C2} of detecting no particle in a same trapping site on two successive images acquired with no particles trapped in the trapping sites, the determined probability p_{00-C2} being equal to the square of the probability of true negative F₀;
- each cycle according to the second scenario comprises a step of acquiring, by the imaging unit, at least another image of the quantum register after loading particles in the quantum register, said image being acquired before or after the at least one image acquired with no particles in the trapping sites, and with a defined delay between the two acquisitions, the probabilities determined from the second imaging sets comprising also:
- the probability p_{00-C2} of detecting no particle in a same trapping site on, in any order, an image acquired with no particles trapped in the trapping sites and an image acquired after loading particles in the quantum register, and
- the probability P_{11-C2} of detecting a particle in a same trapping site on, in any order, an image acquired with no particles trapped in the trapping sites and an image acquired after loading particles in the quantum register,
   the probabilities p_{00-C2} and P_{11-C2} being dependent on the probability of true negative F₀, on the probability of true positive F₁ and on an additional quantity which is a loading ratio L of particles between the two acquisitions, the additional quantity being also determine as a function of the probabilities determined from the first imaging sets and the second imaging sets, and enabling also characterizing the imaging fidelity of the imaging unit (22) for the given detection threshold;
- the probabilities P_{00-C2} and P_{11-C2} are given by the following equations: ${P}_{00 - C 2} = \left(1-{F}_{1}\right) {LF}_{0} + {F}_{0}^{2} \left(1-L\right)$ ${P}_{11 - C 2} = {F}_{1} L \left(1-{F}_{0}\right) + {\left(1-{F}_{0}\right)}^{2} \left(1-L\right) ;$
- during the phase of performing imaging cycles according to the second scenario, the at least one image of the quantum register with no particles trapped in the trapping sites is acquired after having implemented at least one of the following actions:
   - blocking particles entering into a vacuum chamber so that such particles be not loaded in the quantum register, and/or
   - not cooling particles in a vacuum chamber so as to prevent the particles to be trapped in a magneto-optical trap, and
   - turning off optical tweezers forming the trapping sites;
- the method comprises a phase of determining a detection threshold enabling to minimize the sum of *P*_{01-*C*1} and *P*₁₀ - _{*C*1}*.*

The invention also relates to a computing system comprising:
- a quantum device comprising an imaging unit, and
- a classical computer,
the computing system being configured for implementing a method as previously described.

### BRIEF DESCRIPTION OF THE DRAWINGS

The invention will be easier to understand in view of the following description, provided solely as an example and with reference to the appended drawings in which:
- Figure 1 is an example of a fitted distribution of electrons, corresponding to photons collected for a trapping site of a quantum register over multiple images of the quantum register,
- Figure 2 is a schematic view of an example of a computing system configured for characterizing the imaging fidelity of an imaging unit of a quantum device,
- Figure 3 is a schematic view of an example of an organigram of a method for characterizing the imaging fidelity of an imaging unit of a quantum device,
- Figure 4 is a schematic view of an example of a cycle for imaging a quantum register according to a first scenario during which particles have been loaded in the trapping sites of the quantum register, and
- Figure 5 is a schematic view of an example of a cycle for imaging a quantum register according to a second scenario in which no particles have been loaded.

### DETAILED DESCRIPTION OF SOME EMBODIMENTS

In the description, the terms "able to", "suitable for", and "configured for" are considered equivalent.

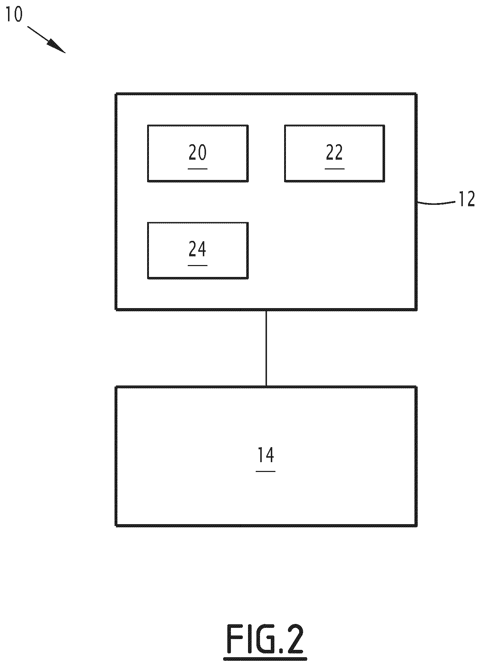

An example of a computing system 10 is illustrated on figure 2.

The computing system 10 is configured to implement a method for characterizing the imaging fidelity of an imaging unit 22 of a quantum device, that will be described hereinafter in the description.

The computing system 10 comprises a quantum device 12, such as a quantum processor (quantum processing unit or QPU), and eventually also a classical computer 14.

The quantum device 12 is for example a quantum processor (quantum processing unit or QPU), or any other quantum devices such as a quantum sensor, an atomic clock, a quantum magnetometer, a quantum gravimeter, a quantum-enhanced microscope, a quantum gyroscope, etc.

In an example, the quantum device 12 comprises a generator 20 of a quantum register, an imaging unit 22 and an operation unit 24.

The generator 20 of a quantum register comprises, for example, a source of particles, a generator of trapping sites for particles, and optionally a rearrangement unit.

For example, the quantum register comprises one or more arrays of trapped particles, such as atoms, for example atoms trapped in optical tweezers or the like, as will be made apparent in the following embodiments. The arrays can be in several dimensions (2D or 3D).

In the case of neutral atoms, the source of particles comprises a vacuum chamber in which the particles (for example atoms) are located. In particular, during use, a vacuum is created in the vacuum chamber and a dilute atomic vapor is formed within the vacuum chamber. Other embodiments are nonetheless possible.

The generator of trapping sites is able to generate a laser beam which when focused generates an array of trapping sites for particles (e.g., optical tweezers). For example, the array of trapping sites can be 1-dimensional, 2-dimensional or 3-dimensional.

In an example of implementation, the generator of trapping sites comprises a laser source, or equivalent, able to generate a laser beam and a beam shaper able to shape the laser beam (e.g., to impart a specific intensity pattern to the laser beam) so as to obtain an array of trapping sites for particles when the laser beam is focused.

The beam shaper is, for example, a spatial light modulator (SLM), such as an optical phase modulator, preferably a liquid crystal optical modulator (LCOS-SLM), or a digital micromirror device (DMD). In another example, the beam shaper comprises one or more acousto-optical deflector, or a device with metasurfaces.

The rearrangement unit is suitable to rearrange particles trapped in trapping sites, so as to obtain a desired quantum register. For example, the rearrangement unit comprises optical tweezers.

The imaging unit 22 is configured to image and detect the presence of particle(s) in the quantum register.

More precisely, the imaging unit 22 is suitable to acquire images of the quantum register generated by the generator 20 of the quantum device 12. In addition, the imaging unit 22 is suitable to detect, on the acquired images, particles trapped in trapping sites of the quantum register as a function of a given detection threshold. The detection threshold is such that, for each trapping site, a particle is considered present in said trapping site when the number of electrons, resulting from the conversion of the photons received by the imaging unit 22 at the location of said trapping site, is above the detection threshold, and is considered absent otherwise.

The imaging unit 22 comprises, for example, a camera such as a charge-coupled device (CCD) camera, or any suitable imaging technology. The camera comprises a processing unit, or is associated with a processing unit. For example, in the case of atoms, the camera is suitable to detect the fluorescence emitted from the atoms.

The operation unit 24 is suitable to manipulate the particles trapped in the trapping sites, and forming the qubits, so as to perform quantum operations on the qubits.

The operation unit 24 comprises for example moving optical tweezers enabling to move the qubits of the quantum register.

The operation unit 24 comprises for example laser devices enabling to send laser pulses on the qubits of the quantum register so as to perform quantum operations on the qubits, for example encoding operations, entangling operations or quantum projection operations.

Examples of quantum processors based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, Septembre 2020. ISSN 2521-327X. doi:10.22331/q-2020-09-21-327.

Typically, the quantum device 12 uses the quantum properties of matter, such as superposition and entanglement, to perform operations on the qubits. In particular, a qubit refers to a two-level quantum system.

In a non-limiting example, a qubit may comprise two basic quantum states l0> and l1> representing the possible quantum states of the qubit. According to the superposition principle of quantum mechanics, any superposition of the form al0> + bl1> (a and b being complex numbers and aa*+bb*=1) is a possible quantum state of the qubit. The population in the l0> state is noted P₀ = lal² and in the l1> state is noted P₁ = lbl².

Preferably, the qubits are formed from neutral atoms, such as rubidium atoms, although other atomic species can be chosen (such as alkaline elements or alkaline-earth elements), alone or in combination of two or more atomic species.

More generally, the invention applies to any other systems based on an optical imaging system using fluorescence of a particle to discriminate the presence or absence of the particle based on a threshold.

The classical computer 14 comprises typically a processor comprising a data processing unit, memories and a reader for information media. Eventually, the classical computer 14 comprises a human machine interface, such as a keyboard, and a display.

In an example of implementation, the classical computer 14 interacts with a computer program product. The computer program product comprises an information medium. The information medium is a medium readable by the classical computer 14, usually by the data processing unit. The readable information medium is a medium suitable for storing electronic instructions and capable of being coupled to a computer system bus. On the information medium is stored the computer program comprising program instructions.

The computer program is loadable on the data processing unit and is adapted to entail the implementation of some steps of a method for characterizing the imaging fidelity of the imaging unit 22 of the quantum device 12 that will be described later in the description.

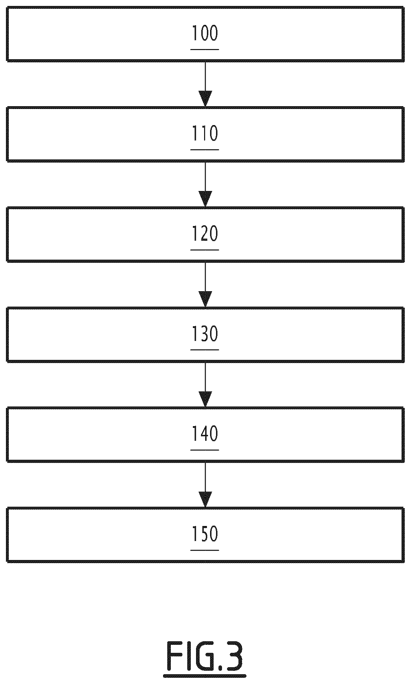

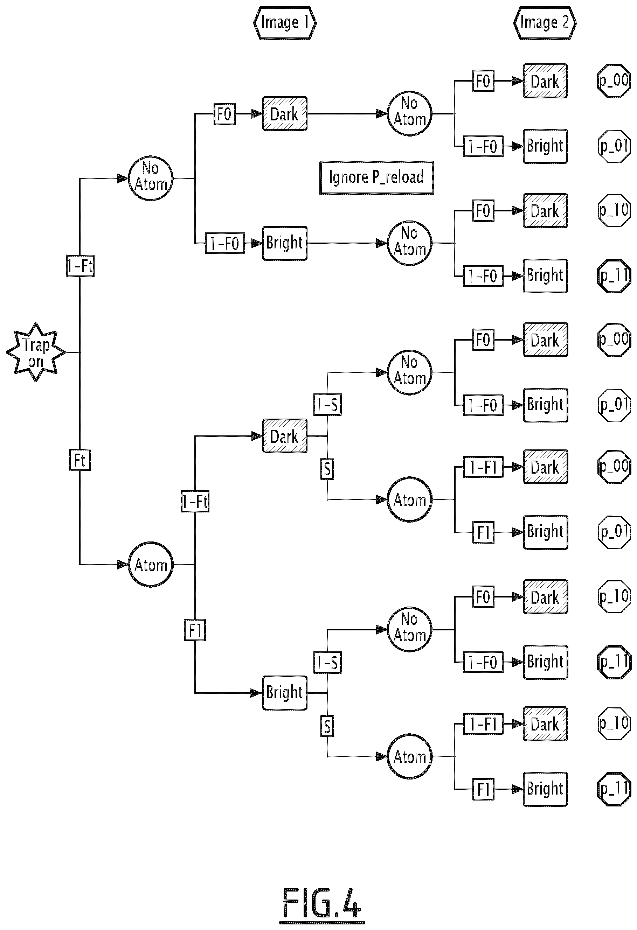

A method for characterizing the imaging fidelity of the imaging unit 22 of the quantum device 12, will now be described with reference to the organigram of figure 3, and to figures 4 to 5, which illustrate examples of some phases of the method.

The characterization method comprises a phase 100 of performing several cycles of imaging of the quantum register according to a first scenario to obtain a first imaging set per cycle.

Each cycle according to the first scenario comprises the following steps:
- loading particles in the trapping sites of the quantum register, and
- acquiring, by the imaging unit 22, at least two successive images of the quantum register with a defined time delay between the acquisitions.

The defined time delay is preferably the minimum delay allowing the acquisition of the two successive images. The defined time delay depends on camera limitation. For example, the defined time delay is inferior or equal to 15 ms.

The number of cycles is for example superior or equal to 100, preferably superior or equal to 200. Generally, the number of cycles needs to be enough such that the values of the calculated quantities of interest are stabilized.

The characterization method comprises a phase 110 of performing several cycles of imaging of the quantum register according to a second scenario to obtain a second imaging set per cycle.

Each cycle according to the second scenario comprises a step of acquiring, by the imaging unit 22, at least one image of the quantum register with no particles trapped in the trapping sites.

Preferably, at least two successive images of the quantum register are acquired with a defined time delay between the acquisitions.

The defined time delay is preferably the minimum delay allowing the acquisition of the two successive images. The defined time delay depends on camera limitation. For example, the defined time delay is inferior or equal to 15 ms.

The number of cycles is for example superior or equal to 100, preferably superior or equal to 200. Generally, the number of cycles needs to be enough such that the values of the calculated quantities of interest are stabilized.

Preferably, the at least one image of the quantum register with no particles trapped in the trapping sites is acquired after having implemented at least one of the following actions:
- blocking particles entering into a vacuum chamber so that such particles be not loaded in the quantum register,
- not cooling particles in a vacuum chamber so as to prevent the particles to be trapped in a magneto-optical trap, and thus to be trapped in the optical tweezers, and
- turning off optical tweezers forming the trapping sites.

Any other method enabling to obtain a quantum register with no particles trapped in the trapping sites can also be used.

The characterization method comprises a phase 120 of detecting on each first imaging set, by the imaging unit 22, based on the detection threshold, the presence or absence of particles in the trapping sites of the quantum register.

In an example of implementation, a detection event occurs when the fluorescence level on the camera of the imaging unit 22 is above the detection threshold. Hence, in the case of the acquisition of two successive images, for a given trapping site, there are four possibilities of detection:
- a detection event occurs in both images (event called "11"),
- a detection event occurs on image 1, but not on image 2 (event called "10"),
- a detection event does not occur on image 1, but occurs on image 2 (event called "01"), and
- a detection event does not occur on image 1 and 2 (event called "00").

In an ideal case, both images will provide the exact same information: traps in which no particles were loaded will be considered as "no detection events"; traps in which a particle was loaded will be considered as "detection events". Therefore, the events "01"and "10" can be considered as detection failures, whilst events "00" and "11"are events in which detection was successful.

The phase 120 also comprises the determination, by the imaging unit 22, on the basis of the detections, of the probabilities of detecting or not particles in a same trapping site on the images acquired during a cycle according to the first scenario.

Figure 4 illustrates an example of the possibilities of detection when implementing a cycle for imaging a quantum register according to the first scenario. In particular, after loading particles, there is a probability Fₜ that a particle is present in a given trapping site, and 1-Fₜ that said trapping site is empty. Then, when taking a first image, when no particle is trapped in said trapping site, there is a probability F₀ of detecting no particles, and a probability 1-F₀ of detecting a particle. When a particle is trapped in said trapping site, there is a probability F₁ of detecting the particle, and a probability 1-F₁ of detecting no particle. When a particle is trapped in said trapping site during the acquisition of the first image, there is a probability S that the particle remains present, and a probability 1-S that the particle is lost before the second image. The scheme is repeated for each possibility when taking the second image.

Preferably, the probabilities determined from the first imaging sets comprise at least:
- a probability P_{11-C1} of detecting a particle in a same trapping site on two successive images acquired during a cycle according to the first scenario (event "11"),
- a probability P_{10-C1} of detecting a particle in a trapping site on an image and not detecting a particle in said trapping site on a successive image, the images being acquired during a cycle according to the first scenario (event "10"),
- a probability P_{01-C1} of not detecting a particle in a trapping site on an image, and of detecting a particle in said trapping site on a successive image, the images being acquired during a cycle according to the first scenario (event "01"), and
- a probability P_{00-C1} of detecting no particle in a same trapping site on two successive images acquired during a cycle according to the first scenario (event "00").

The determined probabilities depend on the following quantities:
- Fₜ: a trapping sites filling probability (loading),
- S: a survival probability for a trapped particle between the at least two successive acquisitions,
- F₀: a probability of true negative defined as the probability of not detecting a particle in a trapping site while there was no particle, and
- F₁: a probability of true positive defined as the probability of detecting a particle in a trapping site while there was one.

Preferably, the probabilities P_{11-C1}, P_{10-C1}, P_{01-C1}, P_{00-C1} determined from the first imaging sets are linked to the quantities Fₜ, S, F₀ and F₁ by the following equations: ${P}_{00 - C 1} = {F}_{t} \left(1-{F}_{1}\right) \left[S\left(1-{F}_{1}\right)+\left(1-S\right){F}_{0}\right] + \left(1-{F}_{t}\right) {F}_{0} {F}_{0}$ ${P}_{01 - C 1} = {F}_{t} \left(1-{F}_{1}\right) \left[{SF}_{1}+\left(1-S\right)\left(1-{F}_{0}\right)\right] + \left(1-{F}_{t}\right) {F}_{0} \left(1-{F}_{0}\right)$ ${P}_{10 - C 1} = {F}_{t} {F}_{1} \left[S\left(1-{F}_{1}\right)+\left(1-S\right){F}_{0}\right] + \left(1-{F}_{t}\right) {F}_{0} \left(1-{F}_{0}\right)$ ${P}_{11 - C 1} = {F}_{t} {F}_{1} \left[{SF}_{1}+\left(1-S\right)\left(1-{F}_{0}\right)\right] + \left(1-{F}_{t}\right) \left(1-{F}_{0}\right) \left(1-{F}_{0}\right)$

This system of four equations is not solvable analytically here as only three out of the four equations are independent (due to the fact that the sum of the four probabilities is equal to one) and there are four unknowns. To do so, additional data is needed as this will be described in phase 130 and 140 hereinafter.

The characterization method comprises a phase 130 of detecting on each second imaging set, by the imaging unit 22, based on the detection threshold, the presence or absence of particles in the trapping sites of the quantum register.

In an example of implementation, a detection event occurs when the fluorescence level on the camera of the imaging unit 22 is above the detection threshold.

The phase 130 also comprises the determination, by the imaging unit 22, on the basis of the detections, of at least the probability of detecting no particle in a same trapping site on the image(s) acquired during a cycle according to the second scenario. The determined probability is dependent on the probability of true negative F₀.

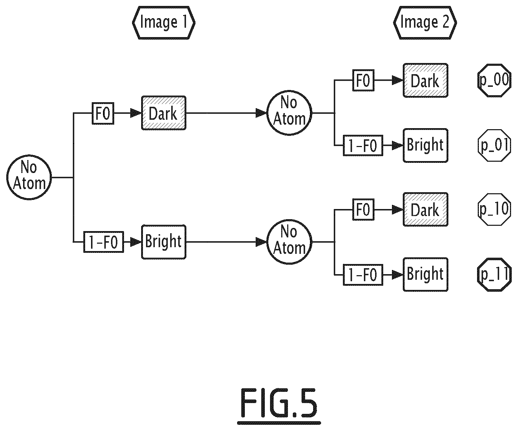

In the example illustrated on figure 5, each cycle according to the second scenario comprises the acquisition, by the imaging unit 22, of two successive images of the quantum register with no particles trapped in the trapping sites.

The detection and determination phase, based on the second imaging sets, comprise the determination of the probability p_{00-C2} of detecting no particle in a same trapping site on two successive images acquired with no particles trapped in the trapping sites. The determined probability P_{00-C2} is equal to the square of the probability of true negative F₀: *P*_{00 *- C*2} = *F*₀².

In a variant, when only one image is acquired during each cycle according to the second scenario, the determined probability is equal to the probability of true negative.

Optionally (not represented in the figures), in complement of acquiring one, two or more successive images with no particles in the trapping sites, each cycle according to the second scenario comprises a step of acquiring, by the imaging unit 22, at least another image of the quantum register after enabling trapping condition in the quantum register (a particle can thus potentially be loaded in each trapping site). Said image has been acquired with a defined delay between the previous or the next acquisition.

The defined time delay is preferably the minimum delay allowing the acquisition of two successive images. The defined time delay depends on camera limitation. For example, the defined time delay is inferior or equal to 15 ms.

In this case, the probabilities determined from the second imaging sets comprise also:
- the probability p_{00-C2} of detecting no particle in a same trapping site on, in any order, an image acquired with no particles trapped in the trapping sites and on an image acquired after loading particles in the quantum register, and
- the probability P_{11-C2} of detecting a particle in a same trapping site on, in any order, an image acquired with no particles trapped in the trapping sites and on an image acquired after loading particles in the quantum register.

The probabilities P_{00-C2} and P_{11-C2} are dependent on the probability of true negative F₀, on the probability of true positive F₁ and on an additional quantity which is a loading ratio L of particles between the two acquisitions.

Preferably, the probabilities p_{00-C2} and P_{11-C2} are given by the following equations: ${P}_{00 - C 2} = \left(1-{F}_{1}\right) {LF}_{0} + {F}_{0}^{2} \left(1-L\right)$ ${P}_{11 - C 2} = {F}_{1} L \left(1-{F}_{0}\right) + {\left(1-{F}_{0}\right)}^{2} \left(1-L\right)$

The characterization method comprises a phase 140 of determining, by the classical computer 14, the quantities Fₜ, S, F₀ and F₁ as a function of the probabilities determined from the first imaging sets and the second imaging sets. In particular, by combining the analysis of double-imaging with particles trapped, and at least an imaging without trapping particles, the quantities Fₜ, S, F₀ and F₁ can be obtained. The determined quantities Fₜ, S, F₀ and F₁ enable characterizing the imaging fidelity of the imaging unit 22 for the given detection threshold.

In the specific embodiment of the imaging cycle according to the second scenario, where at least an image is acquired without trapping particles, and another image is acquired with particles trapped, the quantity L is also determined. This quantity also enables to characterize the imaging fidelity of the imaging unit 22 for the given detection threshold.

The characterization method comprises a phase 150 of determining a detection threshold. The phase 150 is for example implemented by the classical computer 14.

In an example, the detection threshold is determined so as to obtain a desired probability of true positive F₁ and/or a desired probability of true negative F₀, as a function of the determined quantities.

Preferably, the detection threshold is the threshold minimizing the sum: *P*_{01 *- C*1} + *P*_{10 *- C*1}*.* In a variant, the detection threshold can be chosen by an operator according to the desired fidelity.

Hence, the method of the invention allows determining with which probability the detection of true positive and true negative occurs. Moreover, the proposed method enables to determine if the particle is lost during the imaging step (survival rate), and to characterize the filling fraction.

The method relies on performing a simple protocol, namely imaging the particles in two scenarios: at least two images with trapping sites on (first scenario), and at least one image with trapping sites off (second scenario). So for each trapping site, at least 3 images are taken: two after particles have been loaded in the trapping sites, and one without trapping particles. The complements or variants presented in the description allow a better precision in the determination of the quantities and/or determining an additional quantity (L for example).

Hence, in an example of implementation, fluorescence imaging is performed twice, and successive images are taken with a minimum of time between the two images (15 ms which is camera limitation).

The method does not rely on any modelling of photon distributions as performed in prior art, and is therefore more precise than the prior art. In particular, the method is a direct measurement, and does not depend on a physical model of the traps that would require fitting a probability density function on the measured histogram data (using models can have several limitations and can be cumbersome to develop and tailor to a specific system or setting).

Such a method works for both digital and analog computations.

Finally, it allows to modify the detection threshold so as to obtain a detection threshold that corresponds to a need in terms of the probability of true positive F₁ and the probability of true negative F₀, without using an underlying model.

The person skilled in the art will understand that the embodiments and variants described above in the description can all be combined provided that they are technically compatible.

In addition, the order of the different phases can be modified as the imaging cycles according to the first and second scenarios are independent. In addition, the detection on the first imaging sets, and the second imaging sets, can be performed directly after the image acquisition, or later in time. Thus, the order of the phases 100, 110, 120 and 130 can be modified, with for example phase 110 occurring before phase 100, or phase 120 occurring directly after phase 100.

## Claims

1. A method for characterizing the imaging fidelity of an imaging unit (22) of a quantum device (12), the imaging unit (22) being suitable to acquire images of a quantum register generated by the quantum device (12), and to detect, on the acquired images, particles trapped in trapping sites of the quantum register as a function of a given detection threshold, the detection threshold being such that, for each trapping site, a particle is considered present in said trapping site when the number of electrons, resulting from the conversion of the photons received by the imaging unit (22) at the location of said trapping site, is above the detection threshold, and being considered absent otherwise, the method being implemented by a computing system (10) comprising the quantum device (12) and a classical computer (14), and comprising the following phases:
- performing several cycles of imaging of the quantum register according to a first scenario to obtain a first imaging set per cycle, each cycle according to the first scenario comprising the following steps:
• loading particles in the trapping sites of the quantum register,
• acquiring, by the imaging unit (22), at least two successive images of the quantum register with a defined time delay between the acquisitions,
- performing several cycles of imaging of the quantum register according to a second scenario to obtain a second imaging set per cycle, each cycle according to the second scenario comprising a step of acquiring, by the imaging unit (22), at least one image of the quantum register with no particles trapped in the trapping sites,
- detecting on each first imaging set, by the imaging unit (22), based on the detection threshold, the presence or absence of particles in the trapping sites of the quantum register, and determining, on the basis of the detections, the probabilities of detecting or not a particle in a same trapping site on the images acquired during a cycle according to the first scenario, the determined probabilities depending on the following quantities:
• Fₜ: a trapping sites filling probability,
• S: a survival probability for a trapped particle between the at least two successive acquisitions,
• F₀: a probability of true negative defined as the probability of not detecting a particle in a trapping site while there was no particle,
• F₁: a probability of true positive defined as the probability of detecting a particle in a trapping site while there was one,
- detecting on each second imaging set, by the imaging unit (22), based on the detection threshold, the presence or absence of particles in the trapping sites of the quantum register, and determining, on the basis of the detections, at least the probability of detecting no particle in a same trapping site on the image(s) acquired during a cycle according to the second scenario, the determined probability being dependent on the probability of true negative F₀, and
- determining, by the classical computer (14), the quantities Fₜ, S, F₀ and F₁ as a function of the probabilities determined from the first imaging sets and the second imaging sets, the determined quantities Fₜ, S, F₀ and F₁ enabling characterizing the imaging fidelity of the imaging unit (22) for the given detection threshold.

2. A method according to claim 1, wherein the probabilities determined from the first imaging sets comprise at least:
- a probability P_{11-C1} of detecting a particle in a same trapping site on two successive images acquired during a cycle according to the first scenario,
- a probability P_{10-C1} of detecting a particle in a trapping site on an image and not detecting a particle in said trapping site on a successive image, the images being acquired during a cycle according to the first scenario,
- a probability P_{01-C1} of not detecting a particle in a trapping site on an image, and of detecting a particle in said trapping site on a successive image, the images being acquired during a cycle according to the first scenario, and
- a probability P_{00-C1} of detecting no particle in a same trapping site on two successive images acquired during a cycle according to the first scenario.

3. A method according to claim 2, wherein the probabilities determined from the first imaging sets are linked to the quantities Fₜ, S, F₀ and F₁ by the following equations: ${P}_{00 - C 1} = {F}_{t} \left(1-{F}_{1}\right) \left[S\left(1-{F}_{1}\right)+\left(1-S\right){F}_{0}\right] + \left(1-{F}_{t}\right) {F}_{0} {F}_{0}$ ${P}_{01 - C 1} = {F}_{t} \left(1-{F}_{1}\right) \left[{SF}_{1}+\left(1-S\right)\left(1-{F}_{0}\right)\right] + \left(1-{F}_{t}\right) {F}_{0} \left(1-{F}_{0}\right)$ ${P}_{10 - C 1} = {F}_{t} {F}_{1} \left[S\left(1-{F}_{1}\right)+\left(1-S\right){F}_{0}\right] + \left(1-{F}_{t}\right) {F}_{0} \left(1-{F}_{0}\right)$ ${P}_{11 - C 1} = {F}_{t} {F}_{1} \left[{SF}_{1}+\left(1-S\right)\left(1-{F}_{0}\right)\right] + \left(1-{F}_{t}\right) \left(1-{F}_{0}\right) \left(1-{F}_{0}\right) .$

4. A method according to any one of claims 1 to 3, wherein each cycle according to the second scenario comprises the acquisition, by the imaging unit (22), of at least two successive images of the quantum register with no particles trapped in the trapping sites, the two images being acquired with a defined time delay between the two acquisitions, the detection and determination phase, for each second imaging set, comprising the determination of the probability p_{00-C2} of detecting no particle in a same trapping site on two successive images acquired with no particles trapped in the trapping sites, the determined probability p_{00-C2} being equal to the square of the probability of true negative F₀.

5. A method according to claim 4, wherein each cycle according to the second scenario comprises a step of acquiring, by the imaging unit (22), at least another image of the quantum register after loading particles in the quantum register, said image being acquired before or after the at least one image acquired with no particles in the trapping sites, and with a defined delay between the two acquisitions, the probabilities determined from the second imaging sets comprising also:
- the probability p_{00-C2} of detecting no particle in a same trapping site on, in any order, an image acquired with no particles trapped in the trapping sites and an image acquired after loading particles in the quantum register, and
- the probability P_{11-C2} of detecting a particle in a same trapping site on, in any order, an image acquired with no particles trapped in the trapping sites and an image acquired after loading particles in the quantum register,
the probabilities P_{00-C2} and P_{11-C2} being dependent on the probability of true negative F₀, on the probability of true positive F₁ and on an additional quantity which is a loading ratio L of particles between the two acquisitions, the additional quantity being also determine as a function of the probabilities determined from the first imaging sets and the second imaging sets, and enabling also characterizing the imaging fidelity of the imaging unit (22) for the given detection threshold.

6. A method according to claim 5, wherein the probabilities P_{00-C2} and P_{11-C2} are given by the following equations: ${P}_{00 - C 2} = \left(1-{F}_{1}\right) {LF}_{0} + {F}_{0}^{2} \left(1-L\right)$ ${P}_{11 - C 2} = {F}_{1} L \left(1-{F}_{0}\right) + {\left(1-{F}_{0}\right)}^{2} \left(1-L\right)$

7. A method according to any one of claims 1 to 6, wherein during the phase of performing imaging cycles according to the second scenario, the at least one image of the quantum register with no particles trapped in the trapping sites is acquired after having implemented at least one of the following actions:
- blocking particles entering into a vacuum chamber so that such particles be not loaded in the quantum register, and/or
- not cooling particles in a vacuum chamber so as to prevent the particles to be trapped in a magneto-optical trap, and
- turning off optical tweezers forming the trapping sites.

8. A method according to claim 2 eventually dependent on any one of claims 3 to 7, wherein the method comprises a phase of determining a detection threshold enabling to minimize the sum of *P*_{01 *- C*1} and *P*_{10 *- C*1}*.*

9. A computing system (10) comprising:
- a quantum device (12) comprising an imaging unit (22), and
- a classical computer (14),
the computing system (10) being configured for implementing a method according to any one of claims 1 to 8.
